# FASCICULE DE BREVET EUROPEEN

(11) **EP 2 444 317 B1**
(45) Date de publication et mention de la délivrance du brevet: **17.04.2013**
(21) Numéro de dépôt: 11184620.0
(22) Date de dépôt: 11.10.2011
(51) Int. Cl.: B64C 25/22

(54) **Circuit hydraulique d'actionnement d'un atterrisseur et procédés de déploiement et de relevage d'un atterrisseur utilisant un tel circuit**
Hydraulikkreislauf zur Betätigung eines Fahrwerks, sowie Einsatz- und Einfahrverfahren eines Fahrwerks, das einen solchen Kreislauf benutzt
Hydraulic circuit for actuating a landing gear and methods for extending and raising a landing gear using such a circuit

(30) Priorité: 20.10.2010 FR 1058581
(43) Date de publication de la demande: 25.04.2012
(73) Titulaire: Messier-Bugatti-Dowty, 78140 Velizy Villacoublay (FR)
(72) Inventeur: Ernis, Sébastien, 92290 Chatenay Malabry (FR); Jubert, Xavier, 92100 Boulogne Billancourt (FR); Leutard, David, 91570 Bievres (FR)
(74) Mandataire: Parzy, Benjamin Alain

(56) Documents cités:
- DE-C- 740 329
- US-A1- 2005 082 427
- US-B2- 7 810 755

## Description

L'invention est relative au domaine des atterrisseurs et plus particulièrement aux circuits hydrauliques d'actionnement des atterrisseurs.

Les atterrisseurs des aéronefs sont en général escamotables et comportent à cet effet des actionneurs de manoeuvre qui commandent le déploiement et le relevage des atterrisseurs ainsi que l'ouverture et la fermeture des portes des soutes de réception des atterrisseurs en position relevée (voir, par exemple, le document US 2005 082 427).

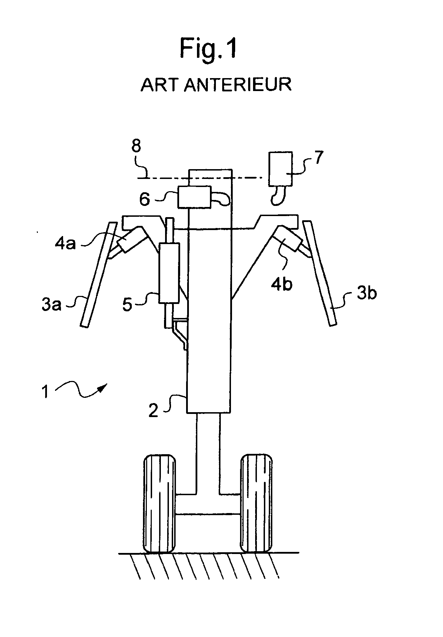

L'art antérieur est ici décrit en relation avec la figure 1 illustrant de façon schématique un atterrisseur d'aéronef. L'atterrisseur 1 comporte une jambe 2 articulée sur l'aéronef autour d'un axe 8 et est ici représentée en position déployée. Un vérin d'atterrisseur 5 double effet, comportant une chambre principale et une chambre annulaire, est attelé à la jambe 2 pour manoeuvrer l'atterrisseur 1 entre une position relevée et une position déployée. L'atterrisseur 1 est susceptible de rentrer dans une soute fermée par des portes 3a et 3b articulées et équipées chacune d'un vérin de porte 4a/4b, double effet, permettant d'ouvrir et de fermer les portes 3a et 3b. Un boitier d'accrochage d'atterrisseur 6 permet de bloquer l'atterrisseur 1 en position relevée et un boitier d'accrochage des portes 7 permet de bloquer les portes en position fermée. Les boitiers d'accrochage 6 et 7 portent des crochets qui sont montés mobiles entre une position décrochetée stable et une position crochetée également stable. L'atterrisseur 1 et les portes 3a et 3b comportent chacun une olive qui vient coopérer lors de leur relevage ou de leur fermeture avec le crochet correspondant pour repousser le crochet vers la position de crochetage stable dans laquelle l'olive est retenue prisonnière par le crochet. Les boitiers d'accrochage 6 et 7 sont équipés d'actionneurs simple effet dont l'actionnement provoque le passage de la position de crochetage à la position décrochetée, libérant ainsi l'élément correspondant.

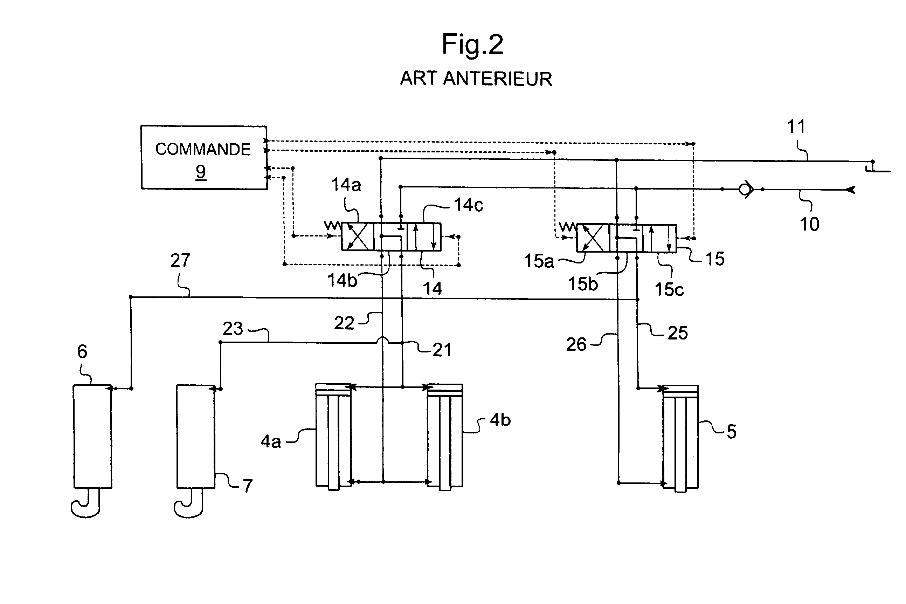

En référence maintenant à la figure 2 illustrant un circuit hydraulique d'actionnement des atterrisseurs selon l'art antérieur, les vérins de porte 4a et 4b et le vérin d'atterrisseur 5, ainsi que les actionneurs des boitiers d'accrochage 6 et 7 sont alimentés par un circuit hydraulique qui comprend :
- une ligne d'alimentation 10 en fluide hydraulique sous pression ;
- une ligne de retour 11 de fluide hydraulique ;
- une première ligne de service 21 du sélecteur de porte 14, appelée ligne d'ouverture 21, qui alimente la chambre principale des vérins de porte 4a et 4b et permet leur extension et donc l'ouverture des portes ;
- une deuxième ligne de service 22 du sélecteur de porte 14, appelée ligne de fermeture 22, qui alimente la chambre annulaire des vérins de porte 4a et 4b et permet leur rétraction et donc la fermeture des portes ;
- un sélecteur de porte 14 permettant de connecter sélectivement les lignes de service des portes 21 et 22 en sortie dudit sélecteur avec la ligne d'alimentation 10 et la ligne de retour 11 ;
- une première ligne de service 25 du sélecteur d'atterrisseur 15 appelée ligne de déploiement 25 qui alimente la chambre principale du vérin d'atterrisseur 5 et permet son extension et donc le déploiement de l'atterrisseur ;
- une deuxième ligne de service 26 du sélecteur d'atterrisseur 15 appelée ligne de relevage 26 qui alimente la chambre annulaire du vérin d'atterrisseur 5 et permet sa rétraction et donc le relevage de l'atterrisseur.
- un sélecteur d'atterrisseur 15 permettant de connecter sélectivement des lignes de service d'atterrisseur 25 et 26 en sortie dudit sélecteur avec la ligne d'alimentation 10 et la ligne de retour 11 ;

Le circuit hydraulique comporte également un organe de commande 9 qui commande les sélecteurs de porte 14 et d'atterrisseur 15. L'organe de commande 9 reçoit des instructions de relevage ou de déploiement des atterrisseurs, et transmet les commandes appropriées aux sélecteurs. L'organe de commande 9 commande les séquences de déploiement et de relevage et peut également prendre en compte des informations provenant de capteurs.

Le sélecteur de porte 14 comporte un tiroir mobile qui peut prendre trois positions 14a, 14b et 14c dont la position 14b est stable et dont les positions extrêmes 14a et 14c ne sont atteintes que si l'organe de commande 9 envoie un ordre correspondant :
- en position 14a, le sélecteur 14 alimente en pression la ligne de fermeture 22 reliée à la chambre annulaire de chaque vérin de porte 4a et 4b, permettant la rétraction desdits vérins et provoquant la fermeture des portes 3a et 3b, l'autre ligne étant mise au retour ;
- en position 14b, le sélecteur 14 connecte au retour les deux lignes de service des portes ;
- en position 14c, le sélecteur 14 alimente en pression la ligne d'ouverture 21 reliée à la chambre principale de chaque vérin de porte 4a et 4b, permettant l'extension desdits vérins et provoquant l'ouverture des portes 3a et 3b, l'autre ligne étant mise au retour.

Le sélecteur 15 d'atterrisseur est identique au sélecteur 14 de porte et comporte un tiroir mobile qui peut prendre trois positions 15a, 15b et 15c permettant respectivement, la rétraction, la mise au retour et l'extension du vérin d'atterrisseur 5.

Le circuit hydraulique décrit en figure 2 comporte également une ligne de décrochetage des portes 23 alimentant l'actionneur du boitier d'accrochage 7 des portes. La ligne de décrochetage des portes 23 est connectée à la ligne d'ouverture des portes 21 de sorte que la commande de l'ouverture des portes 3a et 3b entraine également l'alimentation de l'actionneur du boitier d'accrochage des portes 7. Ainsi, le sélecteur 14 peut commander simultanément l'ouverture des portes 3a et 3b et leur décrochetage.

De façon similaire, une ligne de décrochetage de l'atterrisseur 27 alimentant l'actionneur du boitier d'accrochage 6 de l'atterrisseur est connectée à la ligne de déploiement de l'atterrisseur 25. La commande de déploiement de l'atterrisseur 1 entraine également l'alimentation de l'actionneur du boitierd'accrochage de l'atterrisseur 6 et ainsi le décrochetage de l'atterrisseur 1. Le sélecteur 15 peut commander simultanément le déploiement de l'atterrisseur 1 et son décrochetage.

Le circuit hydraulique selon l'art antérieur est utilisé selon les séquences de relevage et de déploiement décrites ci-dessous :

La séquence de déploiement de l'atterrisseur comporte les étapes de :
- ouvrir les portes, ce qui entraine leur décrochetage ;
- déployer l'atterrisseur, ce qui entraine son décrochetage ;
- fermer les portes, ce qui entraine leur crochetage automatique.

La séquence de relevage de l'atterrisseur comporte ainsi par symétrie les étapes de :
- ouvrir les portes, ce qui entraine leur décrochetage ;
- relever l'atterrisseur, ce qui entraine son crochetage automatique ;
- fermer les portes, ce qui entraine leur crochetage automatique.

Le décrochetage simultané des portes 3a et 3b avec leur ouverture pose toutefois quelques difficultés. En effet, l'ouverture des portes alors qu'elles sont toujours crochetées, entraine un effort important sur le crochet. Le crochet doit donc pouvoir résister à cet effort et l'actionneur du boitier d'accrochage 7 des portes doit être capable de passer de la position crochetée à la position décrochetée malgré la pression des portes sur les crochets.

Les mêmes difficultés apparaissent lors du déploiement de l'atterrisseur.

### OBJET DE L'INVENTION

L'invention vise à proposer un circuit hydraulique d'actionnement d'un atterrisseur remédiant au moins partiellement à ces difficultés.

### BREVE DESCRIPTION DE L'INVENTION

En vue de la réalisation de ce but, l'invention propose un circuit hydraulique pour l'actionnement d'un atterrisseur comprenant :
- une ligne d'alimentation en fluide et une ligne de retour ;
- au moins un sélecteur de porte, connecté aux lignes d'alimentation et de retour, qui alimente des lignes de service de portes, dont une ligne d'ouverture des portes et une ligne de fermeture des portes ;
- au moins un sélecteur d'atterrisseur, connecté aux lignes d'alimentation et de retour, qui alimente des lignes de service d'atterrisseur, dont une ligne de déploiement et une ligne de relevage de l'atterrisseur;
- une ligne de décrochetage des portes et une ligne de décrochetage de l'atterrisseur.

Selon l'invention, la ligne de décrochetage des portes est connectée à au moins une ligne de service d'atterrisseur tandis que la ligne de décrochetage de l'atterrisseur est connectée à au moins une ligne de service de portes, le circuit comportant en outre des moyens pour connecter les lignes de service de portes entre elles lors d'une phase d'ouverture des portes, et des moyens pour connecter les lignes de service d'atterrisseur entre elles lors d'une phase de déploiement de l'atterrisseur.

Ainsi, il est possible grâce au circuit de l'invention, en mettant en oeuvre une séquence adéquate, de faire en sorte de soulager les boîtiers d'accrochage avant de commander le déverrouillage de ceux-ci.

### BREVE DESCRIPTION DES DESSINS

L'invention sera mieux comprise à la lumière de la description et en référence aux figures annexées et données à titre d'exemple parmi lesquelles, outre les figures 1 et 2 déjà décrites et relatives à l'art antérieur, la figure 3 illustre un circuit hydraulique de commande d'un atterrisseur selon un mode de réalisation particulier de l'invention.

### DESCRIPTION DETAILLEE DE L'INVENTION

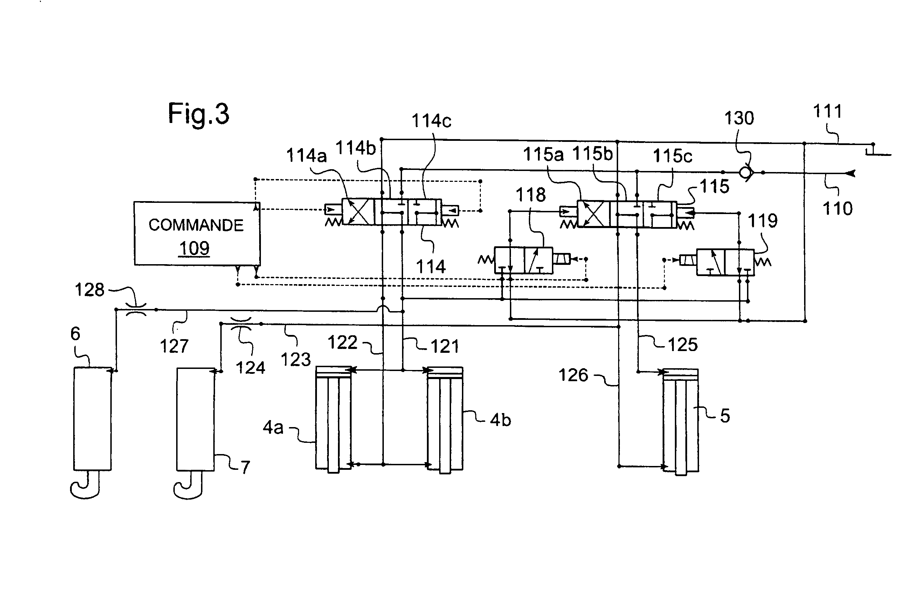

Le circuit hydraulique selon l'invention, illustré en figure 3, comporte les mêmes éléments que le circuit hydraulique de l'art antérieur. Les éléments de la figure 3 déjà représentés en figure 2 sont désignés par la même référence augmentée d'une centaine. Par exemple, la ligne d'alimentation 10 de la figure 2 devient la ligne d'alimentation 110 de la figure 3. Le circuit hydraulique selon l'invention comporte ainsi :
- une ligne d'alimentation 110 en fluide hydraulique sous pression ;
- une ligne de retour 111 de fluide hydraulique ;
- un sélecteur de porte 114 alimentant .
- une ligne d'ouverture 121 des portes et;
- une ligne de fermeture 122 des portes;
- un sélecteur d'atterrisseur 115 alimentant :
- une ligne de déploiement 125 de l'atterrisseur et ;
- une ligne de relevage 126 de l'atterrisseur ;
- des lignes de décrochetage des portes 123 et de décrochetage de l'atterrisseur 127.

Le circuit hydraulique comporte également un organe de commande 109 qui commande les différentes positions des sélecteurs.

A la différence de l'art antérieur illustré à la figure 2, la ligne de décrochetage des portes 123 est selon l'invention connectée à la ligne de relevage 126 de l'atterrisseur tandis que la ligne de décrochetage de l'atterrisseur 127 est selon l'invention connectée à la ligne d'ouverture des portes 121. On a ainsi croisé les lignes de décrochetage.

Par ailleurs, les sélecteurs 114 et 115 sont ici modifiés de sorte à mettre les deux lignes service reliées au même sélecteur en communication avec la ligne d'alimentation dans les positions 114c et 115c. Lorsque le sélecteur d'atterrisseur 115 est en position 115c, les lignes de déploiement 125 et de relevage 126 sont ainsi alimentées simultanément et le vérin 5 travaille en mode différentiel. Dans ce mode de fonctionnement, l'alimentation simultanée sous une même pression des chambres principale et annulaire entraine l'extension du vérin. Le fonctionnement en mode différentiel du vérin d'atterrisseur 5 diminue la force exercée par le vérin, ce qui n'est pas gênant dans la mesure où l'atterrisseur est naturellement amené à se déployer sous l'effet de son poids. Le rôle du vérin d'atterrisseur 5 dans le déploiement de l'atterrisseur 1 est donc uniquement de vaincre les éventuelles résistances mécaniques et aérodynamiques. Il en est de même pour les portes.

La ligne de décrochetage des portes 123 et la ligne de décrochetage de l'atterrisseur 127 comportent chacune respectivement une restriction de passage 124 et une restriction de passage 128. Ces restrictions agissent comme des retardateurs et diffèrent l'actionnement des boitiers d'accrochage 6 et 7 par rapport aux actionneurs de porte et d'atterrisseur. Ainsi, lorsque la ligne de relevage 122 est alimentée par la ligne d'alimentation 110, le décrochetage des portes 3a et 3b est commandé, mais avec un retard.

Enfin, selon une disposition particulière améliorant la sécurité de l'ensemble, le sélecteur d'atterrisseur 115 est commandé non plus directement par l'organe de commande 109, mais par l'intermédiaire de deux vannes de pilotage 118 et 119. Celles-ci sont du type à une sortie et deux entrées (une alimentation et un retour) et à deux positions. La ligne d'alimentation des vannes 108 et 109 est connectée directement à la ligne d'ouverture 121 des portes de sorte que l'atterrisseur 1 ne peut être manoeuvré que si les portes 3a et 3b sont commandées en ouverture. Cette disposition évite qu'en cas de dysfonctionnement de l'organe de commande 9, l'atterrisseur soit manoeuvré sans que les portes 3a et 3b soient manoeuvrées en ouverture.

La séquence de relevage de l'atterrisseur est la suivante.

En partant d'une position pour laquelle l'atterrisseur 1 est déployé, les portes 3a et 3b sont fermées et crochetées, les sélecteurs de porte 114 et d'atterrisseur 115 étant en position neutre, la séquence de relevage selon l'invention comporte les étapes de :
**a)** commander le sélecteur de porte 114 pour confirmer la fermeture des portes 3a et 3b en amenant le sélecteur de portes 114 en position 114a, ce qui soulage le crochet de porte ;
**b)** commander le sélecteur d'atterrisseur 115 pour confirmer le déploiement de l'atterrisseur 1 en amenant le sélecteur d'atterrisseur 115 en position 115c, ce qui permet le décrochetage des portes ;
**c)** commander le sélecteur de porte 114 pour provoquer l'ouverture des portes 3a et 3b en amenant le sélecteur de portes 114 en position 114c ;
**d)** commander le sélecteur d'atterrisseur 115 pour provoquer le relevage de l'atterrisseur 1 en amenant le sélecteur d'atterrisseur 115 en position 115a jusqu'à crochetage de l'atterrisseur ;
**e)** neutraliser le sélecteur de l'atterrisseur 115 en le laissant revenir en position 115b ;
**f)** commander le sélecteur de porte 114 pour provoquer la fermeture des portes 3a et 3b en amenant le sélecteur de portes 114 en position 114a jusqu'à crochetage des portes ;
**g)** neutraliser le sélecteur de porte 114 en le laissant revenir en position 114b.

La séquence de déploiement de l'atterrisseur est la suivante :

En partant d'une position pour laquelle l'atterrisseur est en position relevée et crochetée, les portes 3a et 3b étant fermées et crochetées, les sélecteurs de portes 114 et d'atterrisseur 115 étant en position neutre, la séquence de déploiement selon l'invention comporte les étapes de :
**a)** commander le sélecteur de porte 114 pour confirmer la fermeture des portes 3a et 3b en amenant le sélecteur de portes 114 en position 114a, ce qui soulage le crochet de porte ;
**b)** commander le sélecteur d'atterrisseur 115 pour confirmer le relevage de l'atterrisseur 1 en amenant le sélecteur d'atterrisseur 115 en position 115a, ce qui soulage le crochet de l'atterrisseur et entraine également le décrochetage des portes ;
**c)** commander le sélecteur de porte 114 pour provoquer l'ouverture des portes 3a et 3b en amenant le sélecteur de portes 114 en position 114c, ce qui provoque le décrochetage de l'atterrisseur, ce jusqu'à ouverture complète des portes ;
**d)** commander le sélecteur d'atterrisseur 115 pour provoquer le déploiement de l'atterrisseur 1 en amenant le sélecteur d'atterrisseur115 en position 115c ;
**e)** neutraliser le sélecteur d'atterrisseur 115 en le laissant revenir en position 115b ;
**f)** commander le sélecteur de porte 114 pour provoquer la fermeture les portes 3a et 3b en amenant le sélecteur de portes 114 en position 114a, ce jusqu'à crochetage des portes ;
**g)** neutraliser le sélecteur 114 de porte en le laissant revenir en position 114b.

Pour garantir la sécurité des mouvements, il convient que les mouvements des différents actionneurs soient effectués successivement. Par exemple, il convient de s'assurer que les portes sont ouvertes avant de déployer ou de relever l'atterrisseur. Pour cela, l'aéronef et l'atterrisseur comportent des capteurs de position détectant la présence de l'atterrisseur et/ou des portes dans les différentes positions. Les informations recueillies sont transmises à l'organe de commande 9 et servent à commander le passage d'une étape à une autre lors des séquences de relevage et de déploiement.

Selon un aspect particulier de l'invention, la ligne d'alimentation 110 comporte un clapet antiretour 130 interdisant au fluide contenu dans la ligne d'alimentation 110 et les lignes de service de remonter le long de la ligne d'alimentation 110. Le clapet antiretour 130 interdit ainsi aux vérins de se rétracter sous l'effet d'efforts externes. Lors du déploiement de l'atterrisseur ou lors de l'ouverture des portes, les vérins de porte 4a et 4b ainsi que le vérin d'atterrisseur 5 ne peuvent dès lors reculer sous l'effet des forces aérodynamiques qui s'exercent sur l'atterrisseur 1 ou sur les portes 3a et 3b.

L'invention n'est bien sur pas limitée à l'exemple de réalisation précédemment décrit. En particulier, les sélecteurs décrits peuvent être remplacés par d'autres organes ayant la même fonction comme des électrovannes indépendantes placées en parallèle et agissant de manière similaire aux sélecteurs.

Les restrictions de passage 124 et 128 agissent comme des temporisations entre les actionneurs reliés à une même ligne de service. D'autres dispositifs réalisant la même fonction de retard peuvent être utilisés et en particulier des vannes temporisées permettant de retarder l'écoulement du fluide dans les lignes de décrochetage des portes 123 et d'atterrisseur 127.

Le circuit hydraulique présenté en figure 3 est destiné à manoeuvrer un atterrisseur 1 et deux portes 3a et 3b. Ce circuit peut également servir à commander plusieurs atterrisseurs et portes simultanément en utilisant des dérivations des lignes de service. Alternativement, on peut prévoir d'utiliser autant de sélecteurs que d'actionneurs d'atterrisseur et de portes à commander.

Le circuit selon l'invention peut également être dupliqué dans l'aéronef à l'identique pour commander autant d'atterrisseurs et de portes que nécessaire.

## Revendications

1. Circuit hydraulique pour l'actionnement d'un atterrisseur comprenant :
- une ligne d'alimentation (110) en fluide et une ligne de retour (111) ;
- au moins un sélecteur de porte (114), connecté aux lignes d'alimentation (110) et de retour (111), qui alimente des lignes de service de portes, dont une ligne d'ouverture des portes (121) et une ligne de fermeture (122) des portes (3a, 3b) ;
- au moins un sélecteur d'atterrisseur (115), connecté aux lignes d'alimentation (110) et de retour (111), qui alimente des lignes de service d'atterrisseur dont une ligne de déploiement (125) et une ligne de relevage (126) de l'atterrisseur (1);
- une ligne de décrochetage des portes (123) et une ligne de décrochetage de l'atterrisseur (127) ;
**caractérisé en ce que** la ligne de décrochetage des portes (123) est connectée à au moins une ligne de service (125, 126) d'atterrisseur tandis que la ligne de décrochetage de l'atterrisseur est connectée à au moins une ligne de service (121, 122) de portes, le circuit comportant en outre des moyens (114) pour connecter les lignes de service de portes entre elles lors d'une phase d'ouverture des portes, et des moyens (115) pour connecter les lignes de service d'atterrisseur entre elles lors d'une phase de déploiement de l'atterrisseur.

2. Circuit hydraulique selon la revendication 1 dans lequel les moyens pour connecter les lignes de service des portes entre elles et les lignes de service d'atterrisseur entre elles sont constitués par une conformation des sélecteurs tels que lorsqu'ils sont commandés pour provoquer le déploiement de l'atterrisseur ou l'ouverture des portes, ils mettent les deux lignes de services en communication.

3. Circuit hydraulique selon la revendication 1, comprenant des vannes de pilotage (118, 119) commandant le sélecteur d'atterrisseur (115) et alimentées en pression par une ligne reliée à la ligne d'ouverture des portes (121).

4. Circuit hydraulique selon la revendication 1, dans laquelle les lignes de décrochetage des portes (123) et de décrochetage de l'atterrisseur (127) comportent chacune des moyens de retard pour retarder un actionnement des crochets (124, 128).

5. Procédé de déploiement d'un atterrisseur utilisant un circuit hydraulique selon l'une quelconque des revendications 1 à 4, **caractérisé en ce qu'**il comporte les étapes de :
a) commander le sélecteur de porte (114) pour confirmer la fermeture des portes (3a, 3b) ;
b) commander le sélecteur d'atterrisseur (115) pour confirmer le relevage de l'atterrisseur (1) ;
c) commander le sélecteur de porte (114) pour provoquer l'ouverture des portes (3a, 3b) jusqu'à ouverture complète des portes (3a, 3b) ;
d) commander le sélecteur d'atterrisseur (115) pour provoquer le déploiement de l'atterrisseur (1) ;
e) neutraliser le sélecteur d'atterrisseur (115);
f) commander le sélecteur de porte (114) pour provoquer la fermeture des portes (3a, 3b) jusqu'à crochetage des portes ;
g) neutraliser le sélecteur (114) de porte.

6. Procédé de relevage d'un atterrisseur utilisant un circuit hydraulique selon l'une quelconque des revendications 1 à 4, **caractérisé en ce qu'**il comporte les étapes de :
a) commander le sélecteur de porte (114) pour confirmer la fermeture des portes (3a, 3b) ;
b) commander le sélecteur d'atterrisseur (115) pour confirmer le déploiement de l'atterrisseur (1) ;
c) commander le sélecteur de porte (114) pour provoquer l'ouverture des portes (3a, 3b) ;
d) commander le sélecteur d'atterrisseur (115) pour provoquer le relevage de l'atterrisseur (1) jusqu'à crochetage de l'atterrisseur (1) ;
e) neutraliser le sélecteur de l'atterrisseur (17) ;
f) commander le sélecteur de porte (114) pour provoquer la fermeture des portes (3a, 3b) jusqu'à crochetage des portes ;
g) neutraliser le sélecteur de porte (16).

## Claims

1. A hydraulic circuit for actuating an undercarriage, the circuit comprising:
• a fluid feed line (110) and a return line (111);
• at least one door selector (114) connected to the feed and return lines (110, 111), the selector feeding door service lines, including an opening line (121) and a closing line (122) for opening and closing the doors (3a, 3b);
• at least one undercarriage selector (115) connected to the feed and return lines (110, 111), the selector feeding undercarriage service lines including a deployment line (125) and a raising line (126) for deploying and raising the undercarriage (1); and
• a door unhooking line (123) and an undercarriage unhooking line (127);
the hydraulic circuit being **characterized in that** the door unhooking line (123) is connected to at least one undercarriage service line (125, 126) while the undercarriage unhooking line is connected to at least one door service line (121, 122), the circuit also including means (114) for connecting the door service lines together during a door opening stage, and means (115) for connecting the undercarriage service lines together during an undercarriage deployment stage.

2. A hydraulic circuit according to claim 1, wherein the means for connecting the door service lines together and the undercarriage service lines together are constituted by the selectors being configured so that when they are controlled for causing the undercarriage to deploy or the doors to open, they put both service lines into communication with each other.

3. A hydraulic circuit according to claim 1, including pilot valves (118, 119) controlling the undercarriage selector (115) and fed with pressure by a line that is connected to the door opening line (121).

4. A hydraulic circuit according to claim 1, wherein each of the door unhooking line (123) and the undercarriage unhooking line (127) includes delay means for delaying actuation of the hooks (124, 128).

5. A method of deploying an undercarriage using a hydraulic circuit according to any one of claims 1 to 4, the method being **characterized in that** it comprises the steps of:
a) controlling the door selector (114) to confirm closure of the doors (3a, 3b);
b) controlling the undercarriage selector (115) to confirm raising of the undercarriage (1);
c) controlling the door selector (114) to cause the doors (3a, 3b) to open until the doors (3a, 3b) are fully opened;
d) controlling the undercarriage selector (115) to cause the undercarriage (1) to deploy;
e) neutralizing the undercarriage selector (115);
f) controlling the door selector (114) to cause the doors (3a, 3b) to close until the doors are hooked; and
g) neutralizing the door selector (114).

6. A method of raising an undercarriage using a hydraulic circuit according to any one of claims 1 to 4, the method being **characterized in that** it comprises the steps of:
a) controlling the door selector (114) to confirm closure of the doors (3a, 3b);
b) controlling the undercarriage selector (115) to confirm deployment of the undercarriage (1);
c) controlling the door selector (114) to cause the doors (3a, 3b) to open;
d) controlling the undercarriage selector (115) to cause the undercarriage (1) to be raised until the undercarriage (1) hooks;
e) neutralizing the undercarriage selector (115);
f) controlling the door selector (114) to cause the doors (3a, 3b) to close until the doors are hooked; and
g) neutralizing the door selector (114).

## Patentansprüche

1. Hydraulikkreislauf zur Betätigung eines Fahrgestells, umfassend:
- eine Zuführleitung (110) zum Zuführen von Fluid und eine Rückführleitung (111);
- mindestens einen Klappen-Umschalter (114), der mit der Zuführleitung (110) und der Rückführleitung (111) verbunden ist und der die Versorgungsleitungen der Klappen speist, von denen eine Leitung eine Öffnungsleitung für die Klappen (121) und eine Leitung eine Verschlussleitung (122) für die Klappen (3a, 3b) ist;
- mindestens einen Fahrgestell-Umschalter (115), der mit der Zuführleitung (110) und der Rückführleitung (111) verbunden ist und der die Versorgungsleitungen des Fahrgestells speist, von denen eine Leitung zum Ausfahren (125) des Fahrgestells und eine Leitung zum Einfahren (126) des Fahrgestells (1) dient;
- eine Leitung zum Entriegeln der Klappen (123) und eine Leitung zum Entriegeln des Fahrgestells (127);
**dadurch gekennzeichnet, dass** die Leitung zum Entriegeln der Klappen (123) mit mindestens einer Versorgungsleitung (125, 126) des Fahrgestells verbunden ist, während die Leitung zum Entriegeln des Fahrgestells mit mindestens einer Versorgungsleitung (121, 122) für die Klappen verbunden ist, wobei der Kreislauf des Weiteren Mittel (114) zum Verbinden der Versorgungsleitungen der Klappen untereinander während einer Öffnungsphase der Klappen sowie Mittel (115) zum Verbinden der Versorgungsleitungen des Fahrgestells untereinander während einer Phase des Ausfahrens des Fahrgestells aufweist.

2. Hydraulikkreislauf nach Anspruch 1, bei dem die Mittel zum Verbinden der Serviceleitungen der Klappen untereinander und der Serviceleitungen des Fahrgestells untereinander aus einer Konfiguration der Umschalter gebildet sind, so dass, wenn sie betätigt werden, um das Ausfahren des Fahrgestells oder das Öffnen der Klappen zu bewirken, sie die beiden Versorgungsleitungen miteinander verbinden.

3. Hydraulikkreislauf nach Anspruch 1, umfassend Steuerventile (118, 119), die den Fahrgestell-Umschalter (115) steuern und die durch eine mit der Öffnungsleitung der Klappen (121) verbundene Leitung mit Druck versorgt werden.

4. Hydraulikkreislauf nach Anspruch 1, bei dem die Leitungen zum Entriegeln der Klappen (123) und zum Entriegeln des Fahrgestells (127) jeweils Verzögerungsmittel zum Verzögern einer Betätigung der Riegel (124, 128) umfassen.

5. Verfahren zum Ausfahren eines Fahrgestells unter Einsatz eines Hydraulikkreislaufs nach einem der Ansprüche 1 bis 4, **dadurch gekennzeichnet, dass** es die folgenden Schritte umfasst:
a) Betätigen des Klappen-Umschalters (114) zum Bestätigen, dass die Klappen (3a, 3b) geschlossen sind;
b) Betätigen des Fahrgestell-Umschalters (115) zum Bestätigen, dass das Fahrgestell (1) eingefahren ist;
c) Betätigen des Klappen-Umschalters (114) um zu erreichen, dass die Klappen (3a, 3b) bis zur vollständigen Öffnung der Klappen (3a, 3b) geöffnet werden;
d) Betätigen des Fahrgestell-Umschalters (115) um zu erreichen, dass das Fahrgestell (1) ausgefahren wird;
e) Neutralisieren des Fahrgestell-Umschalters (115);
f) Betätigen des Klappen-Umschalters (114) um zu erreichen, dass die Klappen geschlossen werden, bis sie verriegelt sind;
g) Neutralisieren des Klappen-Umschalters (114).

6. Verfahren zum Einfahren eines Fahrgestells unter Einsatz eines Hydraulikkreislaufs nach einem der Ansprüche 1 bis 4, **dadurch gekennzeichnet, dass** es die folgenden Schritte umfasst:
a) Betätigen des Klappen-Umschalters (114) zum Bestätigen, dass die Klappen (3a, 3b) geschlossen sind;
b) Betätigen des Fahrgestell-Umschalters (115) zum Bestätigen, dass das Fahrgestell (1) ausgefahren ist;
c) Betätigen des Klappen-Umschalters (114) um eine Öffnung der Klappen (3a, 3b) zu erreichen;
d) Betätigen des Fahrgestell-Umschalters (115) um zu erreichen, dass das Fahrgestell (1) eingefahren wird, bis das Fahrgestell (1) verriegelt ist;
e) Neutralisieren des Fahrgestell-Umschalters (17);
f) Betätigen des Klappen-Umschalters (114) um zu erreichen, dass die Klappen (3a, 3b) geschlossen werden, bis sie verriegelt sind;
g) Neutralisieren des Klappen-Umschalters (16).
